**Europäisches Patentamt**

**European Patent Office**

**Office européen des brevets**

(11) Veröffentlichungsnummer: **0 049 332**
**A1**

(12) # EUROPÄISCHE PATENTANMELDUNG

(21) Anmeldenummer: **81105602.7**

(22) Anmeldetag: **16.07.81**

(51) Int. Cl.³: **H 04 M 1/23**
**H 04 M 1/08**

(30) Priorität: **08.10.80 DE 3037947**

(43) Veröffentlichungstag der Anmeldung:
**14.04.82 Patentblatt 82/15**

(84) Benannte Vertragsstaaten:
**AT BE CH FR GB IT LI LU NL SE**

(71) Anmelder: **KRONE GmbH**
**Goerzallee 311**
**D-1000 Berlin 37(DE)**

(72) Erfinder: **Bräther, Wolfgang**
**Waldsassener Strasse 11**
**D-1000 Berlin 48(DE)**

(74) Vertreter: **Patentanwälte Beetz sen. - Beetz jr. Timpe -**
**Siegfried - Schmitt-Fumian**
**Steinsdorfstrasse 10**
**D-8000 München 22(DE)**

(54) **Taste zum Wählen bei aufgelegtem Handapparat und zum Lauthören.**

(57) Eine Taste (7) zum Wählen bei aufgelegtem Handapparat (WAH-Taste) und zum Lauthören für insbesondere Fernsprechapparate ist, um beide Funktionen mit möglichst wenigen Teilen, auf kleinstem Raum und mit minimalem Kraft- und Wegaufwand zu erfüllen, so ausgebildet, daß an einer zwei Positionen (a, b) einnehmenden Kurbel (1) ein Schieber (2) sowie ein Gelenk (3) an den gegenüberliegenden Seiten drehbar gelagert sind, wobei das Gelenk (3) über einen Mitnehmer (4) mit einem Gabelumschalter (5) verbunden ist und der Schieber (2) unabhängig von den Positionen (a) oder (b) bei gedrückter WAH-Taste (7) mit seiner an der Unterseite (2a) angeordneten Kante (2b) gegen die abgeflachte Seite einer Herzkurve (6a) eines Rastelementes (6) drückt, um somit einen an der WAH-Taste (7) angeordneten Stift (7a), der im Rastelement (6) durch die Herzkurve (6a) gesteuert wird, durch Wegschwenken des Rastelementes (6) in der Bewegungsrichtung des Schiebers (2) freizugeben, wobei das Rastelement (6) und der Schieber (2) auf gleicher Ebene angeordnet sind.

Fig. 1

## Taste zum Wählen bei aufgelegtem Handapparat und zum Lauthören

Die Erfindung betrifft eine Taste zum Wählen bei aufgelegtem Handapparat (WAH-Taste) für Fernmeldegeräte, insbesondere für Fernsprechapparate.

Die Erfindung zeigt einen Weg, eine Taste zu konstruieren, die folgende Aufgaben lösen soll:

1. Bei aufgelegtem Handapparat soll ein zweiter Fernsprechteilnehmer anwählbar sein.

2. Bei abgenommenem Handapparat soll die Taste eine Lauthörmöglichkeit auslösen.

3. Zu den Punkten 1 und 2 sollen möglichst wenige Teile auf kleinstem Raum das Problem lösen, um den vorhandenen Raum im Fernsprechapparat nicht einzuengen.

4. Die Lösungsfunktionen der Punkte 1 und 2 müssen mit minimalem Kraft- und Wegaufwand realisiert werden.

125-(x 2153)-TE

Die Lösung dieser Aufgabe besteht in der Hauptsache in den kennzeichnenden Maßnahmen des Anspruches 1. Vorteilhafte weitere Ausgestaltungen der einzelnen Maßnahmen dieser Erfindung sind in den Unteransprüchen gekennzeichnet.

Erfindungsgemäß werden dadurch folgende Vorteile auf einfachste Weise erreicht:

1. Der Handapparat bleibt so lange aufgelegt, bis sich der angewählte Fernsprechteilnehmer meldet. Beim Abheben des Handapparates geht die Taste in ihre Ausgangsstellung zurück.

2. Die im Raum anwesenden Personen können bei Betätigung der Taste mithören. Bei Auflegen des Handapparates geht die Taste in ihre Ausgangsstellung zurück.

Die Erfindung soll anhand der in der Zeichnung dargestellten Ausführungsbeispiele näher erläutert werden.

Es zeigen:

Fig. 1    die Hauptansicht der WAH-Taste mit der Verbindung zum Gabelumschalter, wobei die gestrichelte Darstellung die Stellung der Bauteile bei aufgelegtem Handapparat darstellt, und

Fig. 2    einen Ausschnitt aus Fig. 1, wobei

- 3 -                    0049332

das Rastelement mit der Herzkurve
vor und nach dem Ausschwenken durch
den Schieber nach der Erfindung dargestellt ist.

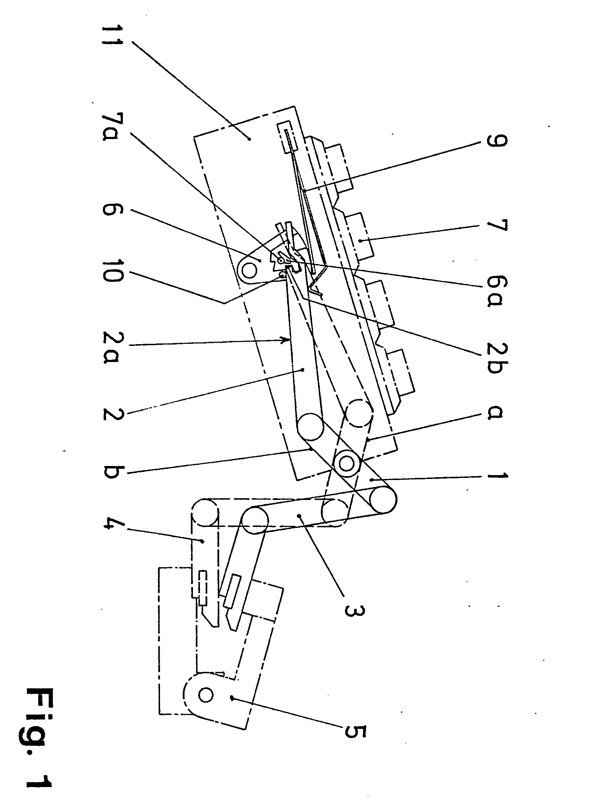

Wie die Fig. 1 zeigt, nimmt die Kurbel 1 zwei Positionen a und b ein.

Ist der Handapparat aufgelegt, wird Position a, ist
der Handapparat abgenommen, so wird Position b von
der Kurbel 1 eingenommen.

Beim Drücken der "Wählen bei aufgelegtem Handapparat" -
kurz: WAH-Taste 7 kann der Handapparat so lange aufgelegt bleiben, bis sich der angewählte Fernsprechteilnehmer meldet.

Beim Abheben des Handapparates geht die WAH-Taste 7
in ihre Ausgangsstellung zurück.

Hierbei geht - wie die Fig. 1 zeigt - die Kurbel 1,
an deren Enden ein Schieber 2 und ein Gelenk 3 drehbar gelagert sind, welch letzteres über einen Mitnehmer 4 mit einem Gabelumschalter 5 verbunden ist, von
Position a in Position b über.

Der Schieber 2 wird durch die an dem Gestell 11 befestigte Blattfeder 9 gegen eine fest angeordnete Auflage 10 gedrückt und somit geführt.

Dieser Schieber 2, an dessen Unterseite 2a eine Kante 2b angeordnet ist, drückt gegen die abgeflachte Seite 6b einer Herzkurve 6a, die in einem Rastelement 6 eingebaut ist.

Der unterhalb der Herzkurve 6a befindliche Stift 7a der WAH-Taste 7 wird durch Wegschwenken des Rastelementes 6 freigegeben, wodurch die WAH-Taste 7 in ihre Ausgangsstellung gelangt.

Erfindungsgemäß besteht ferner die Möglichkeit, durch erneutes Drücken der WAH-Taste 7 ein Lauthören zu ermöglichen.

Auch hierbei geht beim Auflegen des Handapparates - und somit bei Betätigung des Gabelumschalters 5 - die WAH-Taste 7 in ihre Ausgangsstellung zurück.

Die Kurbel 1 geht von der Position b in die Position a über. Auch hier drückt der Schieber 2, der durch die Feder 9 am Stift 7a anliegt, mit seiner an der Unterseite 2a angeordneten Kante 2b gegen die abgeflachte Seite 6b der Herzkurve 6a und bringt somit das Rastelement 6 zum Wegschwenken, wodurch der Stift 7a der WAH-Taste 7 freigegeben wird.

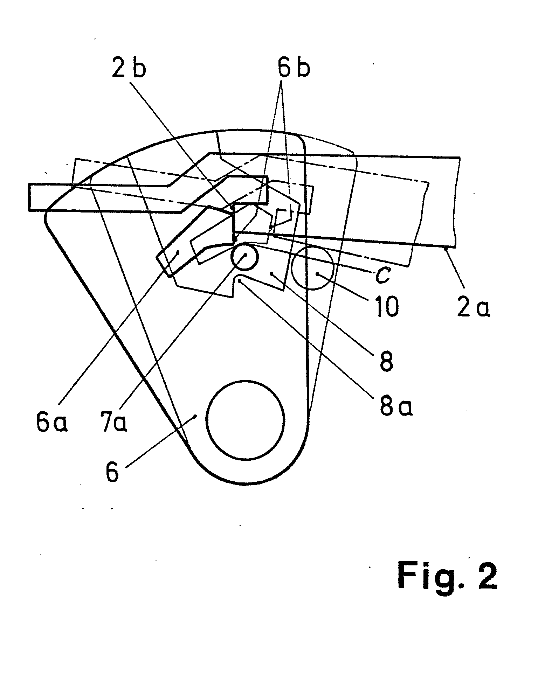

Die Fig. 2 zeigt, daß hierfür im Rastelement 6 eine speziell ausgebildete Herzkurve 6a eingebaut ist, die die funktionellen Forderungen erfüllt.

Auch die im Rastelement 6 eingearbeitete Führungsnut 8 ist speziell ausgebildet. Bei gedrückter
WAH-Taste 7 nimmt der Stift 7a die Position c ein,
wodurch die WAH-Taste 7 in dieser Position (Arbeitsstellung) gehalten wird.

In der Führungsnut 8 ist ein Haken 8a eingearbeitet. Befindet sich der Stift 7a in der Position c,
so wird durch Drücken der WAH-Taste 7 das Rastelement 6 durch den Haken 8a geschwenkt, wodurch der
Stift 7a freigegeben wird und die WAH-Taste 7 in
ihre Ruhestellung gelangt.

Die WAH-Taste 7 kann also durch Drücken der WAH-
Taste 7 selbst oder durch den Gabelumschalter 5
bzw. durch Auf- oder Abheben des Handapparates
- Betätigung des Gabelumschalters 5 - in ihre Ausgangsstellung gebracht werden.

0049332

Patentansprüche:
----------------

1. Taste zum Wählen bei aufgelegtem Handapparat (WAH-Taste) und zum Lauthören für Fernmeldegeräte, insbesondere für Fernsprechapparate,
dadurch gekennzeichnet,
daß an einer zwei Positionen (a, b) einnehmenden Kurbel (1) ein Schieber (2) sowie ein Gelenk (3) an den gegenüberliegenden Enden drehbar gelagert sind, wobei das Gelenk (3) über einen Mitnehmer (4) mit einem Gabelumschalter (5) verbunden ist und der Schieber (2) unabhängig von den Positionen (a) oder (b) bei gedrückter WAH-Taste (7) mit seiner an der Unterseite (2a) angeordneten Kante (2b) gegen die abgeflachte Seite (6b) einer Herzkurve (6a) eines Rastelementes (6) drückt, um somit einen an der WAH-Taste (7) angeordneten Stift (7a), der im Rastelement (6) durch die Herzkurve (6a) gesteuert wird, durch Wegschwenken des Rastelementes (6) in der Bewegungsrichtung des Schiebers (2) freizugeben, wobei das Rastelement (6) und der Schieber (2) auf gleicher Ebene angeordnet sind.

2. Taste nach Anspruch 1,
dadurch gekennzeichnet,
daß eine Blattfeder (9) an einem Tastengestell (11) befestigt ist.

3. Taste nach Anspruch 1,
dadurch gekennzeichnet,

125-(x 2153)-TE

0049332

daß für den mit der WAH-Taste verbundenen Stift
(7a) eine Führung vorgesehen ist.

4. Taste nach Anspruch 1,
dadurch gekennzeichnet,
daß im Rastelement (6) eine speziell geformte Herzkurve (6a) sowie eine Führungsnut (8) angeordnet
sind.

**Fig. 1**

**Fig. 2**

# EUROPÄISCHER RECHERCHENBERICHT

Europäisches
Patentamt

Nummer der Anmeldung

EP 81 10 5602

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - B - 1 212 161 (SEL) <br><br> * Spalte 1, Zeile 50 - Spalte 3, Zeile 15; Figuren * | 1 |
| | WESTERN ELECTRIC TECHNICAL DIGEST, Nr. 43, Juli 1976, Seiten 31-32 Indianapolis, U.S.A. J.R. SEEDS: "Automatic button restoration for telephone key set" <br><br> * Insgesamt * | 1 |
| P | DE - A - 2 931 168 (HAGENUK) <br><br> * Seite 6; Figuren * | 1 |
| | FR - A - 2 002 267 (STANDARD RADIO & TELEFON) <br><br> * Seite 2, Zeile 32 - Seite 5, Zeile 31; Figuren * | 1,4 |

### KLASSIFIKATION DER ANMELDUNG (Int. Cl.)

H 04 M 1/23
1/08

### RECHERCHIERTE SACHGEBIETE (Int. Cl.)

H 04 M 1/23
1/06
1/08
1/62

### KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 19-01-1982 | KEPPENS |

EPA form 1503.1 06.78